# EUROPÄISCHE PATENTSCHRIFT

(11) **EP 0 781 450 B1**
(45) Veröffentlichungstag und Bekanntmachung des Hinweises auf die Patenterteilung: **12.08.1998**
(21) Anmeldenummer: 95932612.5
(22) Anmeldetag: 01.09.1995
(51) Int. Cl.: G21C 5/10

(54) **KERNMANTEL, INSBESONDERE ZUR UMHÜLLUNG EINES REAKTORKERNES IN EINEM SIEDEWASSERKERNREAKTOR**
REACTOR-CORE SHROUD, IN PARTICULAR A SHROUD FOR A BOILING-WATER NUCLEAR REACTOR
ENVELOPPE SERVANT NOTAMMENT A ENTOURER LE COEUR D'UN REACTEUR NUCLEAIRE A EAU BOUILLANTE

(30) Priorität: 14.09.1994 DE 4432616
(43) Veröffentlichungstag der Anmeldung: 02.07.1997
(73) Patentinhaber: SIEMENS AKTIENGESELLSCHAFT, 80333 München (DE)
(72) Erfinder: LOOCK, Ralf, D-91083 Baiersdorf (DE); KÄUFL, Theo, D-92318 Neumarkt (DE); SCHRAMM, Herbert, D-91315 Höchstadt (DE)
(86) Internationale Anmeldenummer: DE9501186
(87) Internationale Veröffentlichungsnummer: WO9608827

(56) Entgegenhaltungen:
- EP-A- 0 059 130
- EP-A- 0 459 021
- US-A- 3 469 865

## Beschreibung

Die Erfindung betrifft einen Kernmantel aus durch Schweißnähte miteinander verbundenen zylinderförmigen Teilen und ringförmigen Flanschen, insbesondere zur Umhüllung eines Reaktorkerns in einem Siedewasserkernreaktor.

Der Kernmantel in Siedewasserkernreaktoren umschließt die Brennelemente und dient hauptsächlich zur Führung des umgewälzten Kühlwassers dessen Strom innerhalb des Kernmantels nach oben und außerhalb des Kernmantels nach unten gerichtet ist. Die zylinderförmigen Teile des Kernmantels bestehen ebenso wie die ringförmigen Flansche üblicherweise aus austenitischen Blechen. Die ringförmigen Flansche dienen als Auflage für ein oberes und für ein unteres Kerngitter und damit auch zur Fixierung der Brennelemente im Reaktorkern.

In Siedewasserkernreaktoren können sich im Kernmantel in der Nähe von Schweißnähten Risse bilden. Zwar treten im Bereich dieser Schweißnähte beim bestimmungsgemäßen Betrieb des Kernreaktors keine oder nur unwesentliche Belastungen auf, trotzdem sollen die Schweißnähte zusätzlich gesichert werden, um einem Wachstum dieser Risse vorzubeugen. Zu diesem Zweck wurde vorgeschlagen auf der Außenseite des Kernmantels oberhalb und unterhalb der betreffenden Schweißnähte sich gegenüberliegende Konsolen anzubringen und diese miteinander zu verbinden. Ein erheblicher Nachteil dieser Lösung besteht jedoch darin, daß der für die Strömung des Kühlwassers erforderliche Querschnitt durch die Konsolen nicht unerheblich verkleinert wird.

Besondere Schwierigkeiten ergeben sich auch dadurch, daß der vorher bereits betriebene Reaktorbehälter wegen der radioaktiven Strahlung auch während der Ertüchtigungsarbeiten mit Wasser gefüllt bleiben muß, so daß alle Arbeiten am Kernmantel unter Wasser auszuführen sind.

Aus der EP 0 459 021 A1 ist ein Reparaturverfahren für eine Schraubverbindung zwischen einem metallischen Kernbehälter und einem ebenfalls metallischen thermischen Schild bekannt, bei dem eine vorhandene Durchgangsbohrung rechteckig auserodiert wird. In die so entstandene Durchgangsöffnung wird ein im Querschnitt ebenfalls rechteckiger Bolzen eingeführt, der den Kernmantel an seiner Innenseite hintergreift. Der Bolzen ist mit einer Durchgangsöffnung versehen, die ein Gewinde aufweist und in die eine Schraube eingeschraubt werden kann. Dieses Verfahren ist jedoch nur zur Verbindung einander überlappender metallischer Bauteile geeignet.

Der Erfindung liegt daher die Aufgabe zugrunde für einen Kernmantel der eingangs genannten Art eine Anordnung und ein Verfahren zu seiner Ertüchtigung anzugeben, die mit vertretbarem Aufwand und großer Sicherheit ferngesteuert und unter Wasser realisierbar ist.

Diese Aufgabe wird erfindungsgemäß dadurch gelöst, daß nutartige Aussparung in der Manteloberfläche vorgesehen ist, die mit ihrem Mittelteil einen beim Schweißen thermisch beeinflußten Bereich durchsetzt, und daß eine vor den Enden dieses Mittelteils jeweils liegende Verbreiterung außerhalb dieses thermisch beeinflußten Bereiches liegt, und daß eine in die Aussparung eingepaßte Klammer annähernd bündig zur Manteloberfläche angeordnet und in der Aussparung verkeilt ist.

Vorzugsweise ist eine I-förmige Aussparung vorgesehen, die quer zu in einer Umfangsrichtung verlaufenden Schweißnaht und parallel zur Mantelachse verläuft.

Zweckmäßige Weiterbildungen der Erfindung bestehen darin, daß eine durch Verkeilung der Klammer erzeugte Kraft durch die zugehörige Schweißnaht miteinander verbundene Teile aufeinanderpreßt, wobei die nutartige Aussparung nachträglich in einer bereits betriebenen Anlage unter Wasser ausgearbeitet, insbesondere erodiert ist und daß zur Verkeilung der Klammer in einer der Quernuten zwei Keile vorgesehen sind, deren jeder durch einen umgebogenen Sicherungslappen gehalten ist. Diese Sicherungslappen sind beim Erodieren der Aussparung auf deren Grund stehengeblieben.

Gemäß einer sehr vorteilhaften Ausgestaltung der Erfindung sind eine Vielzahl, beispielsweise zwölf, von Anordnungen aus je einer Aussparung und der zugehörigen Klammer in Umfangsrichtung auf eine Schweißnaht verteilt.

Die erfindungsgemäße Gestaltung eines Kernmantels ist sehr vorteilhaft, weil dieser ohne Demontage, quasi in situ, auch im Anschluß an eine längere Betriebszeit so nachrüstbar ist, daß in oder parallel zu den Schweißnähten auftretende Risse praktisch kompensiert werden, indem durch die erfindungsgemäß vorgesehenen Klammern ein Absturz von Teilen des Kernmantels mitsamt von diesem gehaltenen Baugruppen so gut wie ausgeschlossen ist und weil diese Ertüchtigung ferngesteuert unter Wasser ohne große Komplikationen durchführbar ist.

Ein Ausführungsbeispiel der Erfindung wird anhand einer Zeichnung näher erläutert.

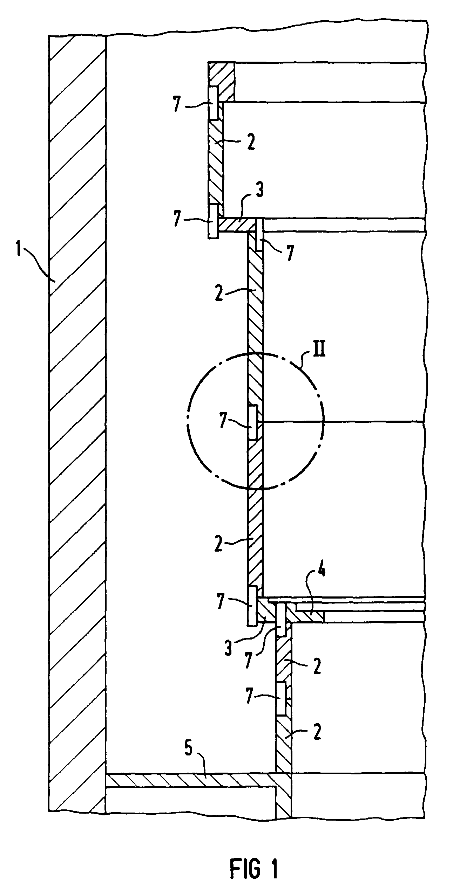

- FIG 1: zeigt einen Ausschnitt aus einem vertikalen, zentrischen Schnitt durch einen Siedewasserreaktor.
- FIG 2: zeigt eine Ansicht auf eine erfindungsgemäße Klammerverbindung bei II in FIG 1 in größerem Maßstab.
- FIG 3: zeigt einen Schnitt entlang der Linie III-III in FIG 2 in noch größerem Maßstab.

In einem Reaktordruckbehälter 1 ist in nicht näher dargestellter Art und Weise ein Kernmantel aus zylinderförmigen Teilen 2 und ringförmigen Flanschen 3 aufgehängt. Die Teile 2 und die Flansche 3 bestehen vorzugsweise aus austenitischem Werkstoff und sind miteinander zu einer Einheit verschweißt. Auf einem unteren Flansch 3 ist eine Kernstützplatte 4 befestigt, die ein nicht dargestelltes unteres Kerngitter trägt. Der Kernmantel und der Reaktordruckbehälter 1 sind durch einen Flansch 5 voneinander distanziert.

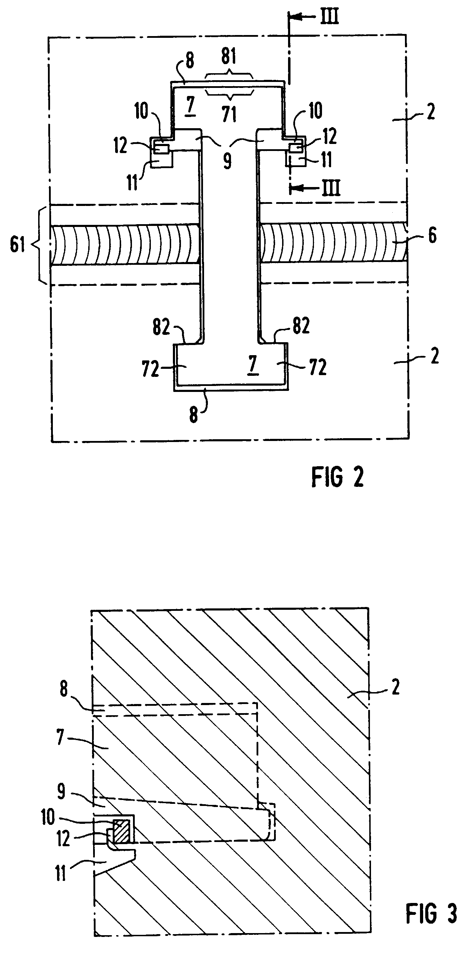

Die Stoßstellen der Teile 2 untereinander und mit den Flanschen 3 sind durch Schweißnähte 6 miteinander verschweißt. Infolge von Alterungserscheinungen, insbesondere durch starke Neutronenbestrahlung, können in einem im Übergangsbereich 61 von einer Schweißnaht 6 zu einem Teil 2 oder einem Flansch 3 Risse auftreten. Dieser rißanfällige Übergangsbereich 61 deckt sich etwa mit dem beim Schweißen thermisch belasteten Bereich und ist in Figur 2 als Bereich zwischen parallel zur Schweißnaht 6 eingezeichneten gestrichelten Linien angedeutet.

Als vorbeugende Maßnahmen zur Kompensation der Auswirkungen etwaiger Risse dienen die Schweißnaht 6 überbrückende Klammern 7, die in Aussparungen 8 verkeilt sind. Die Aussparungen 8 sind nutartig gestaltet und vorzugsweise durch Funkenerosion mit einem fernbedienbaren Gerät unter Wasser hergestellt an einem bereits vorher über längere Zeit in Betrieb gewesenen Kernmantel. Die Klammern 7 und die Aussparungen 8 sind einander angepaßt und im Ausführungsbeispiel I-förmig gestaltet.

Die Klammer 7 und die Aussparung 8 umfassen jeweils ein Mittelteil 71 bzw. 81, das länger ist als die Breite des rißanfälligen Bereiches 61. Das Mittelteil 81 der Aussparung 8 weist vor seinen Enden jeweils eine Verbreiterung 82 auf, die im Ausführungsbeispiel als annähernd rechteckige Quernut gestaltet ist. Die Klammer 7 weist entsprechend gestaltete Querstege 72 auf, die von diesen Quernuten aufgenommen werden und vollständig in einem beim Schweißen thermisch unbelasteten Bereich liegen. Die Tiefe der Aussparung 8 und die Dicke der Klammern 7 ist etwa gleich der halben Wanddicke der zylindrischen Teile 2, so daß die Klammern 7 bündig mit der äußeren Oberfläche des Kernmantels abschließen.

Zur spielfreien Verbindung der Klammern 7 mit der Aussparung 8 sind die freien Enden eines der Querstege der Klammer 7, wie FIG 2 zeigt, gegen die Aussparungswand durch Keile 9 fest verspannt.

Seitliche Vorsprünge oder Verbreiterungen 10 der Keile 9 ragen in seitliche Taschen oder Ausbuchtungen 11 der Aussparungen 8. In diesen Ausbuchtungen 11 sind beim Ausarbeiten oder Erodieren Lappen 12 stehengeblieben. Die seitlichen Verbreiterungen 10 sind gegenüber den Rückseiten der Keile 9 versetzt, so daß die Lappen 12 nach abgeschlossener Montage der Klammern 7 und der Keile 9 vor deren Verbreiterung 10 gebogen werden können. Die Keile 9 sind dann unverlierbar in den Aussparungen 8 gehalten.

Je nach Anzahl und Größe der zu erwartenden bzw. der ermittelten Risse sind mehr oder weniger Klammern 7 je Schweißnaht vorgesehen. Als praktisch und aus Festigkeitsgründen meistens ausreichend sind beispielsweise zwölf Klammern 7 entlang einer Schweißnaht 6 auf den Umfang verteilt.

## Patentansprüche

1. Kernmantel aus durch Schweißnähte miteinander verbundenen zylinderförmigen Teilen (2) und ringförmigen Flanschen (3), insbesondere zur Umhüllung eines Reaktorkerns in einem Siedewasserkernreaktor, mit wenigstens einer in der Oberfläche des Kernmantels angeordneten nutartigen Aussparung (8), die mit ihrem Mittelteil (81) einen beim Schweißen thermisch beeinflußten Bereich (61) durchsetzt und vor den Enden dieses Mittelteils jeweils eine Verbreiterung (82) aufweist, die außerhalb dieses thermisch beeinflußten Bereiches (61) liegt, wobei eine in die Aussparung (8) eingepaßte Klammer (7) annähernd bündig zur Manteloberfläche angeordnet und in der Aussparung (8) verkeilt ist.

2. Kernmantel nach Anspruch 1, bei dem eine I-förmige Aussparung (8) vorgesehen ist, die quer zu einer in Umfangsrichtung eines zylinderförmigen Teiles (2) verlaufenden Schweißnaht (6) und parallel zur Mantelachse des zylinderförmigen Teiles (2) verläuft.

3. Kernmantel nach Anspruch 1 oder 2, bei dem die Klammer (7) derart verkeilt ist, daß durch die Verkeilung eine Kraft ausgeübt wird, die durch die zugehörige Schweißnaht (6) miteinander verbundene Teile aufeinanderpreßt.

4. Kernmantel nach einem der Ansprüche 1.bis 3, bei dem zur Verkeilung der Klammer (7) ein Keil (9) vorgesehen ist, der durch einen umgebogenen Sicherungslappen (12) gehalten ist.

5. Kernmantel nach einem der Ansprüche 1 bis 4, bei dem die Sicherungslappen (12) beim Erodieren der Aussparung (8) auf deren Grund stehengeblieben sind.

6. Kernmantel nach einem der Ansprüche 1 bis 5, bei dem eine Vielzahl von Anordnungen aus je einer Aussparung (8) und der zugehörigen Klammer (7) in Umfangsrichtung auf eine Schweißnaht (6) verteilt ist.

7. Verfahren zum Reparieren eines Kernmantels aus durch Schweißnähte miteinander verbundenen zylinderförmigen Teilen (2) und ringförmigen Flanschen (3), insbesondere eines Kernmantels zur Umhüllung eines Reaktorkerns in einem Siedewasserkernreaktor, bei dem in der Oberfläche des Kernmantels wenigstens eine nutartige Aussparung (8) ausgearbeitet wird, die mit ihrem Mittelteil (81) einen beim Schweißen thermisch beeinflußten Bereich (61) durchsetzt und vor den Enden dieses Mittelteils jeweils eine Verbreiterung (82) aufweist, die außerhalb dieses thermisch beeinflußten Bereiches (61) liegt, wobei eine in die Aussparung (8) eingepaßte Klammer (7) annähernd bündig zur Manteloberfläche angeordnet und in der Aussparung (8) verkeilt wird.

8. Verfahren nach Anspruch 7, bei dem die nutartige Aussparung (8) nachträglich in einer bereits betriebenen Anlage unter Wasser erodiert ist.

9. Verfahren nach einem der Ansprüche 7 oder 8, bei dem nach dem Verkeilen der Klammer (7) mit einem Keil (9) ein Sicherungslappen (12) umgebogen wird, der den Keil (9) hält.

10. Verfahren nach Anspruch 9, bei dem der Sicherungslappen beim Ausarbeiten der Aussparung (8) auf deren Grund stehen bleibt.

## Claims

1. Core shroud composed of cylindrical parts (2) connected to one another by means of weld seams and of annular flanges (3), in particular for cladding a reactor core in a boiling-water nuclear reactor, with at least one groove-like recess (8) which is arranged in the surface of the core shroud and passes with its middle part (81) through a region (61) thermally influenced during welding and which has, in front of each of the ends of this middle part, a widening (82) which lies outside this thermally influenced region (61), a clamp (7) fitted into the recess (8) being arranged approximately flush with the shroud surface and being wedged in the recess (8).

2. Core shroud according to Claim 1, wherein there is provided an I-shaped recess (8) which runs transversely relative to a weld seam (6), extending in the circumferential direction of a cylindrical part (2), and parallel to the shroud axis of the cylindrical part (2).

3. Core shroud according to Claim 1 or 2, wherein the clamp (7) is wedged in such a way that the wedging exerts a force which presses onto one another the parts which are connected to one another by means of the associated weld seam (6).

4. Core shroud according to one of Claims 1 to 3, wherein, to wedge the clamp (7), there is provided a wedge (9) which is held by a bent-round retaining tab (12).

5. Core shroud according to one of Claims 1 to 4, wherein the retaining tabs (12) are left standing on the bottom of the recess (8) during the erosion of the latter.

6. Core shroud according to one of Claims 1 to 5, wherein a multiplicity of arrangements, each composed of a recess (8) and of the associated clamp (7), are allocated to a weld seam (6) in the circumferential direction.

7. Method for repairing a core shroud composed of cylindrical parts (2) connected to one another by means of weld seams and of annular flanges (3), in particular a core shroud for cladding a reactor core in a boiling-water nuclear reactor, in which there is worked out in the surface of the core shroud at least one groove-like recess (8) which passes with its middle part (81) through a region (61) thermally influenced during welding and which has, in front of each of the ends of this middle part, a widening (82) which lies outside this thermally influenced region (61), a clamp (7) fitted into the recess (8) being arranged approximately flush with the shroud surface and being wedged in the recess (8).

8. Method according to Claim 7, wherein the groove-like recess (8) is subsequently eroded underwater in a plant which is already in operation.

9. Method according to one of Claims 7 or 8, wherein, after the wedging of the clamp (7) by means of a wedge (9), a retaining tab (12), which holds the wedge (9), is bent round.

10. Method according to Claim 9, wherein the retaining tab is left standing on the bottom of the recess (8) when the latter is being worked out.

## Revendications

1. Enveloppe composée de pièces cylindriques (2) et de brides annulaires (3), reliées ensemble par des cordons de soudure, conçue en particulier pour l'enveloppement d'un noyau d'un réacteur à eau bouillante, avec un évidement (8) en forme de rainure pratiqué à la surface de l'enveloppe, évidement qui traverse avec sa partie centrale (81) une zone (61) soumise à une influence thermique pendant le soudage, et qui comporte devant les extrémités respectives de cette partie centrale un élargissement (82) qui est placé à l'extérieur de cette zone sous influence thermique (61), ce qui fait qu'un crampon de fixation (7) ajusté dans l'évidement (8) est positionné à peu près au ras de la surface de l'enveloppe et claveté dans l'évidement (8).

2. Enveloppe selon la revendication 1 dans laquelle un évidement en forme de I (8) est prévu, qui court transversalement à un cordon de soudure (6) posé sur la périphérie d'une pièce cylindrique (2), et parallèlement à l'axe de l'enveloppe de la pièce cylindrique (2).

3. Enveloppe selon la revendication 1 ou 2, dans laquelle le crampon de fixation (7) est claveté de telle façon qu'une force est exercée par le clavetage de manière à pousser l'une sur l'autre les pièces reliées ensemble par le cordon de soudure (6) correspondant.

4. Enveloppe selon l'une des revendications 1 à 3, dans laquelle une clavette (9) est prévue pour le clavetage du crampon de fixation (7), clavette qui est maintenue par une patte de sécurité recourbée (12).

5. Enveloppe selon l'une des revendications 1 à 4, dans laquelle les pattes de sécurité (12) ont subsisté sur la base de l'évidement (8), pendant l'érosion de celui-ci.

6. Enveloppe selon l'une des revendications 1 à 5, dans laquelle une multitude de dispositifs composés chacun d'un évidement (8) et du crampon de fixation correspondant (7) sont répartis sur toute la périphérie d'un cordon de soudure (6).

7. Procédé pour la réparation d'une enveloppe composée de pièces cylindriques (2) et de brides annulaires (3) reliées ensemble par des cordons de soudure, en particulier d'une enveloppe destinée à l'enveloppe d'un noyau d'un réacteur à eau bouillante, dans lequel au moins un évidement (8) en forme de rainure est pratiqué à la surface de l'enveloppe, évidement qui traverse avec sa partie centrale (81) une zone (61) soumise à une influence thermique pendant le soudage, et qui comporte devant les extrémités respectives de cette partie centrale un élargissement (82) qui est placé à l'extérieur de cette zone sous influence thermique (61), ce qui fait qu'un crampon de fixation (7) ajusté dans l'évidement (8) est positionné à peu près au ras de la surface de l'enveloppe et claveté dans l'évidement (8).

8. Procédé selon la revendication 7, dans lequel l'évidement (8) en forme de rainure est érodé a posteriori et sous l'eau dans une installation déjà en exploitation.

9. Procédé selon l'une des revendications 7 ou 8, dans lequel, après le clavetage du crampon de fixation (7) avec une clavette (9), une patte de sécurité (12) qui maintient la clavette (9) en place est recourbée.

10. Procédé selon la revendication 9, dans lequel la patte de sécurité subsiste sur la base de l'évidement (8) lors de l'élaboration de celui-ci.
